(19)

Europäisches
Patentamt
European
Patent Office
Office européen
des brevets

(11) **EP 1 873 855 A1**

(12) **EUROPEAN PATENT APPLICATION**
published in accordance with Art. 153(4) EPC

(43) Date of publication:
**02.01.2008 Bulletin 2008/01**

(51) Int Cl.:
*H01M 8/04* (2006.01)     *H01M 8/02* (2006.01)
*H01M 8/10* (2006.01)

(21) Application number: **06729354.8**

(22) Date of filing: **17.03.2006**

(86) International application number:
**PCT/JP2006/305364**

(87) International publication number:
**WO 2006/101033 (28.09.2006 Gazette 2006/39)**

(84) Designated Contracting States:
**DE**

(30) Priority: **23.03.2005 JP 2005083476**

(71) Applicant: **KABUSHIKI KAISHA TOSHIBA**
**Tokyo 105-8001 (JP)**

(72) Inventors:
• **NEGISHI, Nobuyasu**
**c/o Toshiba Corportation**
**Minato-ku,**
**Tokyo 105-8001 (JP)**

• **HASEBE, Hiroyuki**
**c/o Toshiba Corporation**
**Minato-ku,**
**Tokyo 105-8001 (JP)**

(74) Representative: **Henkel, Feiler & Hänzel**
**Patentanwälte**
**Maximiliansplatz 21**
**80333 München (DE)**

(54) **FUEL CELL**

(57) The present invention provides a fuel cell comprising: a cathode catalyst layer 2; an anode catalyst layer 3; a membrane electrode assembly 1 including a proton conductive membrane 6 disposed between the cathode catalyst layer 2 and the anode catalyst layer 3; an outer case 15 having an air intake port 14 for supplying an air to the cathode catalyst layer 2; a cathode conductive layer 7a provided to a side of the cathode catalyst layer 2 of the membrane electrode assembly 1; an anode conductive layer 7b provided to a side of the anode catalyst layer 3 of the membrane electrode assembly 1; and a liquid fuel tank 9 for storing a liquid fuel and supplying a vaporized component of the liquid fuel to the anode catalyst layer 3; wherein a supporting projection 16 for supporting the anode conductive layer 7a and the membrane electrode assembly 1 and for pressing the anode conductive layer 7a and the membrane electrode assembly 1 to a side of the outer case 15 is provided to the liquid fuel tank 9 so as to project from a bottom of the liquid fuel tank 9. According to the above structure, there can be provided a fuel cell having a system in which a vaporized fuel obtained by vaporizing a liquid fuel is supplied to an anode catalyst layer. Especially, there can be provided a fuel cell of which a power generating part is hardly deformed, and capable of exhibiting excellent cell characteristics.

FIG. 1

**Description**

Technical Field

The present invention relates to a fuel cell having a system in which a vaporized fuel obtained by vaporizing a liquid fuel is supplied to an anode catalyst layer. More particularly, the present invention relates to a fuel cell of which power generating part is hardly deformed, and capable of exhibiting excellent cell characteristics.

Background Art

In recent years, various electronic devices such as personal computer, cellular phone or the like have been manufactured to be miniature in size in accordance with a remarkable development of semiconductor technique, and a fuel cell has been tried to be adopted as a power source for these small-sized electronic devices. The fuel cell has advantages such that it can generate an electrical power by only being supplied with the fuel and the oxidizing reagent, and the power generating operation can be continuously performed as far as only the fuel is substantially supplied to the cell. Due to above advantages, when the miniaturization or downsizing of the fuel cell is realized, it can be said that the fuel cell becomes a really advantageous system as an operating power source for the portable electronic devices. In particular, a direct methanol fuel cell (DMFC) uses methanol having a high energy density as the fuel, and can directly extract a current from methanol at an electrode catalyst. Therefore, the fuel cell does not require a reformer for reforming the methanol, so that the fuel cell can be formed in a compact size, and a handling of the fuel is safe and easy in comparison with a cell using hydrogen gas as fuel, so that the fuel cell has been expected as a power source for the compact electronic devices.

As a method of supplying the fuel into DMFC, the following types have been adopted. Namely, there are: a gas-fuel supplying type DMFC in which a liquid fuel is vaporized and the vaporized fuel gas is then supplied into the fuel cell by means of a blower or the like; a liquid-fuel supplying type DMFC in which a liquid fuel is supplied, as it is, into the fuel cell by means of a liquid pump or the like; and an internal- vaporizing type DMFC as disclosed in a patent document 1 (Japanese Patent No. 3413111).

The internal-vaporizing type DMFC shown in the patent document 1 comprises: a fuel penetrating layer for retaining the liquid fuel; and a fuel vaporizing layer for vaporizing the liquid fuel and diffusing a vaporized component of the liquid fuel retained in the fuel penetrating layer, so that the vapor of the liquid fuel is supplied from the fuel vaporizing layer to a fuel pole (anode). In the fuel cell disclosed in the patent document 1, there is used a methanol aqueous solution as the liquid fuel prepared by mixing methanol with water at a molar ratio of about 1:1, and both the methanol and water in a form of a vaporized gas mixture is supplied to the fuel pole.

Patent Document 1: Patent Gazette of Japanese Patent No. 3413111

According to the conventional internal-vaporizing type DMFC shown in the patent document 1, the softly- made power generating part was liable to deform and a current- collecting property was also liable to vary, so that a sufficiently high output power characteristic could not be obtained. That is, all of the membrane electrode assembly constituting the power generating part and conductive layers bonded thereto are formed of thin-film materials or metal foils each having a soft-elasticity and flexibility. On the other hand, at an upper portion of the liquid fuel tank opposing to the above power generating part is formed with a space for storing the vaporized fuel. Therefore, even if a fastening pressure applied to the outer case and the fuel tank is increased to be high, the power generating part is liable to bend toward an upper space side of the liquid fuel tank to which the power generating part is opposed. As a result, a close-contacting degree between the respective members disposed in the membrane electrode assembly constituting the power generating part is lowered, and the current collecting property of the collector for taking-out the current from the power generating part is changed, so that there has been posed the problem that the cell output power is liable to be lowered.

Further, for the purpose of preventing the deformation of the power generating part, a structure in which a presser plate having a high rigidity is disposed to a side of the anode conductive layer has been also in practical use. However, due to existing the presser plate, there has been also posed a problem that the fuel cell is difficult to be downsized.

Disclosure of the Invention

The present invention has been achieved to solve the above conventional problems, and an object of the present invention is to provide a fuel cell having a system in which a vaporized fuel obtained by vaporizing a liquid fuel is supplied to an anode catalyst layer, and capable of effectively preventing the deformation of the power generating part, and capable of exhibiting excellent cell characteristics.

To achieve the above object, the present invention provides a fuel cell comprising: a cathode catalyst layer; an anode catalyst layer; a membrane electrode assembly (MEA) including a proton conductive membrane disposed between the cathode catalyst layer and the anode catalyst layer; an outer case having an air intake port for supplying an air to the cathode catalyst layer; a cathode conductive layer provided to a side of the cathode catalyst layer of the membrane electrode assembly; an anode conductive layer provided to a side of the anode catalyst layer of the membrane electrode assembly; and a liquid fuel tank for storing a liquid fuel and supplying a vaporized component of the liquid fuel to the anode catalyst layer; wherein a supporting projection for supporting the anode conductive layer and the membrane electrode assembly and for pressing the anode conductive layer and the membrane electrode assembly to a side of the outer case is provided to the liquid fuel tank so as to project from a bottom of the liquid fuel tank.

According to the above fuel cell, the membrane electrode assembly constituting the power generating part and conductive layers bonded thereto are pressed by the supporting projection toward the side of the outer case, so that it becomes possible to effectively prevent the power generating part from being bent toward the upper space side of the liquid fuel tank to which the power generating part is opposed. As a result, a close-contacting degree between the respective members constituting the power generating part can be increased. Accordingly, a current collecting property is not changed, so that the output power characteristics of the fuel cell can be greatly increased.

Further, in the above fuel cell, it is preferable to configure the fuel cell such that an area ratio of a cross sectional area of the supporting projection with respect to a cross sectional area of the liquid fuel tank is 3 - 50%.
When this area ratio of the supporting projection becomes excessively small to be less than 3%, the supporting projection cannot exhibit a sufficient function of pressing the anode conductive layer and the membrane electrode assembly toward the side of the outer case, and the bending of the power generating part is not eliminated. In addition, the close-contacting degree between the respective constitutional members becomes insufficient, and an impedance between the anode electrode and the cathode electrode is increased thereby to lower the cell characteristic.
On the other hand, when the area ratio of the supporting projection becomes excessively large so as to exceed 50%, a volume of the supporting projection in the liquid fuel tank is relatively increased, so that a circulation space (fuel path) of the fuel gas is decreased and a supplying amount of fuel is also decreased thereby to lower the cell output power. Accordingly, the area ratio of the supporting projection is set to within a range of 3 to 50%. However, preferable range is 4 to 40%, and more preferable range is 5 to 30%.

In this regard, the number of the supporting projection is not limited to one. A plurality of the supporting projections may be separately provided in a vertical direction. Particularly in a case where a plurality of anode conductive layers are formed, when tip end portions of the respective supporting projections abut against a central portion of each anode conductive layers and the plurality of the supporting projections are configured so as to be provided in a longitudinal direction of the anode conductive layer with leaving a predetermined interval therebetween, it becomes possible to disperse a stress caused at the power generating part, thus being preferable. In this case, it goes without saying that the cross sectional area of the supporting projection means a total value of the cross sectional areas of the respective supporting projections.

Further, in the above fuel cell, it is preferable that a central axis of the air intake port formed to the outer case is deviated from a central axis of the supporting projection. When the fuel cell is configured such that the central axis of the air intake port is coincided with the central axis of the supporting projection, a supporting and pressing force by the supporting projection would not applied to the outer case, and is easily released from the air intake port through a thin power generating part. As a result, the pressing force for mutually close-contacting the members constituting the power generating part becomes insufficient, so that the current collecting property is deteriorated thereby to lower the power generating property.

Furthermore, in the above fuel cell, it is also preferable to configure the fuel cell such that a cross sectional diameter of the supporting projection is gradually decreased in a direction from the liquid fuel tank to the anode conductive layer. An inclination angle of a side surface of this supporting projection may be sufficiently set to 1 to 3 degree with respect to a central axis of the supporting projection.

When the above supporting projection is formed to have a columnar shape, truncated cone-shape or square pole shape, a flow-path resistance of the fuel flowing in the fuel tank can be lowered. Particularly, in a case where the supporting projection is configured such that the cross sectional diameter of the supporting projection is gradually decreased in a direction from the liquid fuel tank to the anode conductive layer, and the fuel tank and the supporting projection are integrally formed as a molded body by an injection molding method or the like, a draft angle (relief angle) is formed to the supporting projection, so that the supporting projection as the molded product can be easily taken out from a molding die.

The shape of the above supporting projection may be a column-shape, truncated cone-shape or square pole shape, and is not particularly limited thereto as far as the supporting projection has a structure capable of supporting the membrane electrode assembly,

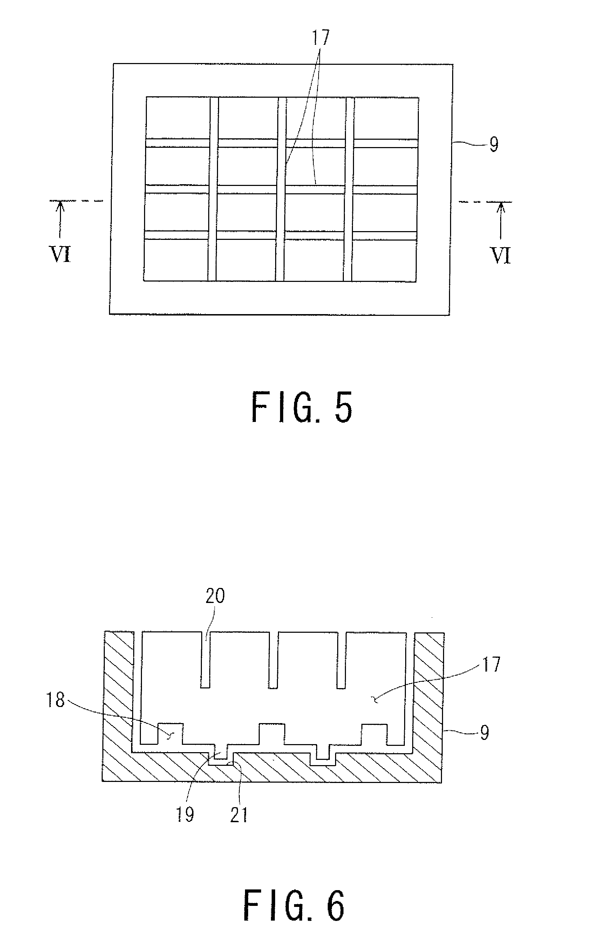

Concretely, for example, as shown in FIG. 5, the supporting projection may have a structure in which a plurality of beam-shaped projection plates 17, 17 are provided to the liquid fuel tank 9 so as to vertically extend from a bottom portion of the liquid fuel tank 9, and the beam-shaped projection plates 17, 17 may be combined to provide a cross-lot shape.

This projection plate 17 is formed with a plurality of circulation holes 18 for circulating the liquid fuel, and the circulation holes 18 are oppose to a bottom surface of the liquid fuel tank 9. Further, at a bottom portion of the projection plate 17 is formed with a fixing projection 19, while at an upper peripheral portion of the projection plate 17 is formed with a groove 20 for engaging another projection plate 17 (projection plate arranged in a vertical direction in FIG. 5) which is orthogonal to one projection plate. When the fixing projection 19 formed to the lower portion of the projection plate 17 is fitted into a fitting hole 21 formed to the bottom portion of the liquid fuel tank 9, the projection plate 17 is integrally fixed to the liquid fuel tank 9.

According to the above attaching structure formed by the projection plate 17, the liquid fuel stored in the liquid fuel tank 9 can freely circulate through the circulation holes 18, so that a circulation path for the liquid fuel can be sufficiently secured.

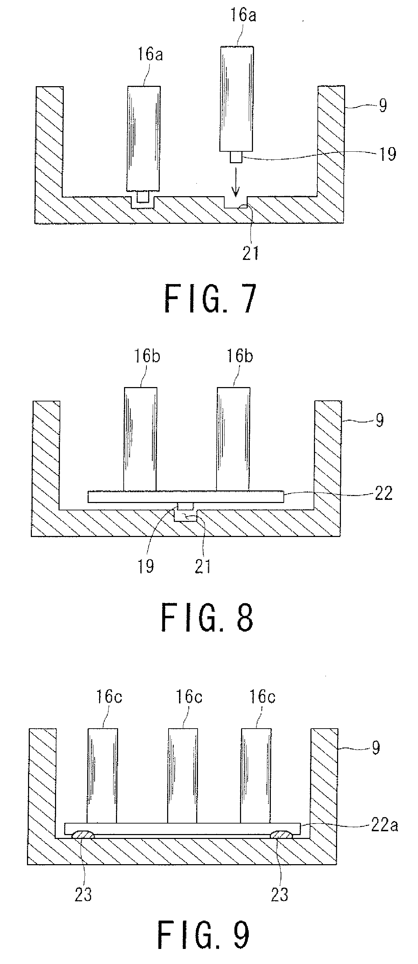

As an attaching structure for attaching the above supporting projection 16 for supporting the membrane electrode assembly to the liquid fuel tank 9, the structures shown in FIGS. 7 to 9 can be also adopted. Concretely, in the structure shown in FIG. 7, when the fixing projection 19 formed to the lower end surface of the supporting projection 16a is fitted into a fitting hole 21 formed to the bottom portion of the liquid fuel tank 9, the supporting projection 16a is integrally fixed to the liquid fuel tank 9.

Further, in the structure shown in FIG. 8, there is prepared an integrally molded body comprising: a plurality of supporting projections 16b to be vertically provided; a base plate 22 for specifying an arranging interval of the supporting projections 16b; and a fixing projection 19 formed to a rear surface of the base plate 22. When the above fixing projection 19 is fitted into a fitting hole 21 formed to the bottom portion of the liquid fuel tank 9, the respective supporting projection 16b are integrally fixed to the liquid fuel tank 9.

Further, the structure shown in FIG. 9 may be also adopted. In the structure shown in FIG. 9, there is prepared an integrally molded body comprising: a plurality of supporting projections 16c to be vertically provided; and a base plate 22a for specifying an arranging interval of the supporting projections 16b. When the base plate 22a of this molded body is bonded to a bottom portion of the liquid fuel tank 9 by resin-adhesion, the base plate 22a and the respective supporting projection 16c are integrally fixed to the liquid fuel tank 9.

As a material for constituting the liquid fuel tank and the respective supporting projection 16c, a supporting projection composed of metal or resin is suitably combined with a liquid fuel tank in a case where the liquid fuel tank is composed of resin or metal. In a case where the liquid fuel tank is formed of metal, the liquid fuel tank is prepared by a die-pressing work, an etching work, or a grinding work or the like. Further, when the liquid fuel tank is formed of resin, the liquid fuel tank is prepared by a grinding work or an injection molding work or the like. On the other hand, the supporting projection is manufactured by the grinding work or the die-pressing work in either event the supporting projection is formed of resin or metal.

As the above metal material, it is preferable to adopt materials such as stainless steel, ceramic material or the like having a high chemical resistance. Further, there can be also adopted a material prepared by applying a chemical resistive coating layer onto a normal metal member. On the other hand, as a resin material, thermoplastic materials such as PPS (polyphenylene sulfide), PEEK (polyether ether ketone) or the like having a chemical resistance can be suitably used.

Further, in the above fuel cell, it is preferable that a moisture retaining plate for preventing an evaporation of water generated at the cathode catalyst layer is disposed between the outer case and the cathode catalyst layer

Furthermore, in the above fuel cell, it is preferable that the liquid fuel is a methanol aqueous solution of which concentration exceeds 50 mol%, or a liquid methanol.

Still further, in the above fuel cell, it is preferable that the proton conductive membrane contains perfluoro carbon type resin, and has a thickness of 100 $\mu$m or less.

According to the above fuel cell of the present invention, the membrane electrode assembly constituting the power generating part and conductive layers bonded thereto are pressed by the supporting projection toward the side of the outer case, so that it becomes possible to effectively prevent the power generating part from being bent toward the upper space side of the liquid fuel tank to which the power generating part is opposed. As a result, a close-contacting degree between the respective members constituting the power generating part can be increased. Accordingly, a current collecting property is not changed, so that the output power characteristics of the fuel cell can be greatly increased.

Best Mode for Carrying Out the Invention

The inventors of this invention had conducted eager researches and developments about a cell structure capable of preventing the power generating part from being bent. As a result, the following technical knowledge and findings were obtained for the fuel cell. Namely, when a supporting projection for supporting the anode conductive layer and the membrane electrode assembly and for pressing the anode conductive layer and the membrane electrode assembly to a side of the outer case was provided to the liquid fuel tank so as to project from a bottom of the liquid fuel tank, it became possible to effectively prevent the power generating part from being bent toward the upper space side of the liquid fuel tank to which the power generating part is opposed. As a result, a close-contacting degree between the respective members constituting the power generating part could be increased. Accordingly, a current collecting property was not changed and could be maintained to a predetermined level, so that the output power characteristics of the fuel cell could be greatly increased.

Further, for the purpose of preventing the deformation of the power generating part, there is no need to additionally dispose a presser plate having a high rigidity to a side of the anode conductive layer unlike the conventional fuel cell, and the power generating part can be clamped between the fuel tank and the outer case, thus enabling the cell structure to simplify.

Hereunder, a direct methanol fuel cell as one embodiment of the fuel cell according to the present invention will be explained and illustrated in more detail with reference to the attached drawings.

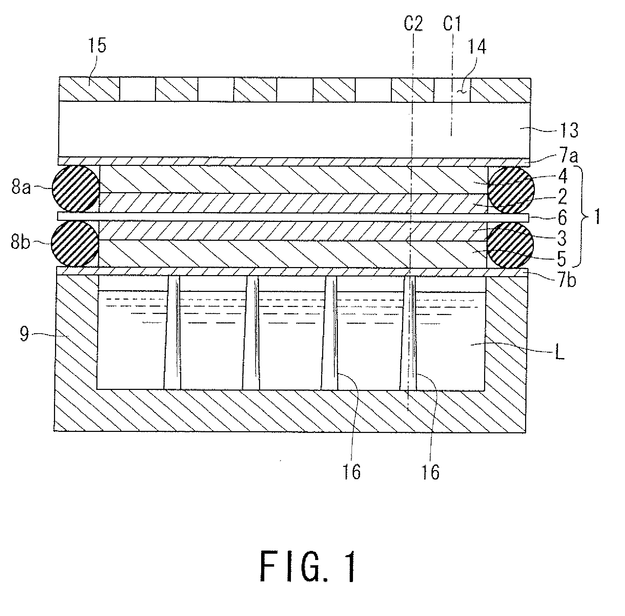

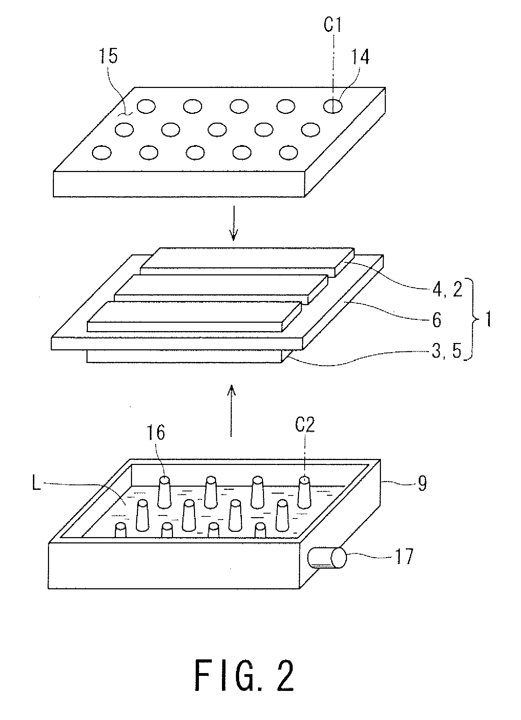

At first, a first embodiment will be explained. FIG. 1 is a sectional view schematically showing a structure of an embodiment of the direct methanol type fuel cell according to the present invention. FIG. 2 is an exploded perspective view schematically showing an assembling state of the fuel cell according to the embodiment shown in FIG. 1.

As shown in FIGs. 1 and 2, the membrane electrode assembly (MEA) 1 is configured by comprising: a cathode pole having a cathode catalyst layer 2 and a cathode gas diffusing layer 4; an anode pole having an anode catalyst layer 3 and an anode gas diffusing layer 5; and a proton conductive electrolyte membrane 6 provided at a portion between the cathode catalyst layer 2 and the anode catalyst layer 3.

Examples of a catalyst contained in the cathode catalyst layer 2 and the anode catalyst layer 3 may include: for example, a single substance metal (Pt, Ru, Rh, Ir, Os, Pd or the like) of the platinum group elements; and alloys containing the platinum group elements. As a material for constituting the anode catalyst, Pt-Ru alloy is preferably used because it has a high resistance to methanol and carbon monoxide. While, as a material for constituting the cathode catalyst, platinum (Pt) is preferably used. However, the materials are not limited thereto. In addition, it is possible to use a support type catalyst using electrically conductive carrier formed of carbon material or the like, and it is also possible to use a non-carrier catalyst.

In addition, examples of a proton conductive material for constituting the proton conductive electrolyte membrane 6 may include: for example, fluoric type resin, such as perfluoro-sulfonic acid, having a sulfonic acid group; hydrocarbon type resin having a sulfonic acid group; and inorganic substances such as tungstic acid, phosphotungstic acid or the like. However, the proton conductive material is not limited thereto.

As shown in FIG. 1, the above cathode catalyst layer 2 is laminated on a lower surface side of the cathode gas diffusing layer 4, while the anode catalyst layer 3 is laminated on an upper surface side of the anode gas diffusing layer 5. The cathode gas diffusing layer 4 fulfills a role of uniformly supplying the oxidizing agent to the cathode catalyst layer 2, and also serves as a collector of the cathode catalyst layer 2. On the other hand, the anode gas diffusing layer 5 fulfills a role of uniformly supplying the fuel to the anode catalyst layer 3, and also serves as a collector of the anode catalyst layer 3.

The cathode conductive layer 7a and the anode conductive layer 7b are respectively contacted to the cathode gas diffusing layer 4 and the anode gas diffusing layer 5. As a material for constituting the cathode conductive layer 7a and the anode conductive layer 7b, for example, a porous layer (for example, mesh member) or foil member composed of a metal material such as gold or the like can be used.

A cathode seal member 8a having a rectangular frame shape is positioned at a portion between the cathode conductive layer 7a and the proton conductive electrolyte membrane 6. Simultaneously, the cathode seal member 8a air-tightly surrounds circumferences of the cathode catalyst layer 2 and the cathode gas diffusing layer 4.

On the other hand, an anode seal member 8b having a rectangular frame shape is positioned at a portion between the anode conductive layer 7b and the proton conductive electrolyte membrane 6. Simultaneously, the anode seal member 8b air-tightly surrounds circumferences of the anode catalyst layer 3 and the anode gas diffusing layer 5. The cathode seal member 8a and the anode seal member 8b are 0-rings for preventing the fuel and the oxidizing agent from leaking from the membrane electrode assembly 1.

Under the membrane electrode assembly 1 is provided with a liquid fuel tank 9. At a bottom of the liquid fuel tank 9 is provided with a plurality of supporting projections 16 for supporting the anode conductive layer 7b and the membrane electrode assembly 1 and for pressing the anode conductive layer 7b and the membrane electrode assembly 1 to a side of the outer case 15 so as to project from the bottom of the liquid fuel tank 9. Each of the supporting projections 16 is formed so that a cross sectional diameter of the respective supporting projection 16 is gradually decreased in a direction from the liquid fuel tank 9 to the anode conductive layer 7b. An area ratio of total cross sectional area of the respective supporting projections 16 at root portion thereof with respect to a cross sectional area of a space portion of the liquid fuel tank 9 is set to 7%.

On the other hand, on an upper surface side of the membrane electrode assembly 1 is attached with an outer case (surface layer) 15 through a moisture retaining plate 13 as described later. This outer case 15 is formed with a plurality of air-intake ports 14 for introducing the air as oxidizing agent into the fuel cell.

In this connection, positions of the air-intake ports 14 and the respective supporting projection 16 are determined such that a central axis C1 of each of the air intake ports 14 formed to the outer case 15 is deviated from a central axis C2 of the supporting projection 16.

Concretely, the positions of the air-intake ports 14 and the respective supporting projection 16 are determined in such a manner that the central axis C2 of the supporting projection 16 is positioned at a middle portion between the adjacent plurality of air-intake ports 14, 14, and the central axis C1 of each of the air intake ports 14 is determined so as not to coincide with the central axis C2 of the supporting projection 16.

In the liquid fuel tank 9, a liquid fuel L such as a liquid methanol, a methanol aqueous solution or the like are accommodated. At an opening end portion of the liquid fuel tank 9 is provided with a fuel vaporizing layer 17. The fuel vaporizing layer 17 allows only the vaporized component of the liquid fuel to pass therethrough, and not allow the liquid fuel to pass therethrough.

In this connection, the vaporized component of the liquid fuel means a vaporized methanol in a case where the liquid methanol is used as the liquid fuel, while the vaporized component of the liquid fuel means a mixture gas comprising a vaporized component of methanol and a vaporized component of water in a case where the methanol aqueous solution is used as the liquid fuel.

On the other hand, on the cathode conductive layer 7a laminated on an upper portion of the membrane electrode assembly 1 may be laminated with a moisture retaining plate 13 for suppressing evaporation of water generated at the cathode catalyst layer. On the moisture retaining plate 13 is laminated with an outer case (surface layer) 15 formed with a plurality of air-intake ports 14 for introducing air as oxidizing agent. The outer case (surface layer) 15 performs also a role in pressing a stack including the membrane electrode assembly 1 thereby to increasing a close-contacting property of the respective members. Therefore, the outer case (surface layer) 15 is formed of metal such as SUS304 or the like. The moisture retaining plate 13 performs a role in suppressing an evaporation of water generated at the cathode catalyst layer 2, and also performs a role as an auxiliary diffusing layer for promoting a uniform diffusion of the oxidizing agent to the cathode catalyst layer 2 by uniformly introducing the oxidizing agent to the cathode gas diffusing layer 4.

According to the embodiment of the direct methanol type fuel cell as described above, the liquid fuel (for example, methanol aqueous solution) stored in the liquid fuel tank 9 is vaporized, the vaporized methanol and water are diffused through a gas/liquid separating film 10 and once accommodated within an upper space (vaporized fuel accommodating chamber 12) of the fuel tank 9. Then, the vaporized methanol and water gradually diffuse in the anode gas diffusing layer 5 thereby to be supplied to the anode catalyst layer 3. As a result, an internal reforming reaction of methanol is taken place in accordance with the following reaction formula (1).

$$CH_3OH + H_2O \longrightarrow CO_2 + 6H^+ + 6e^- \qquad -------- (1)$$

Further, in a case where a pure methanol is used as the liquid fuel, there is no water supplied from the fuel vaporizing layer, so that the water generated by the oxidation reaction of the methanol mixed in the cathode catalyst layer 2 or a moisture content or the like in the proton conductive electrolyte membrane 6 reacts with methanol. As a result, the internal reforming reaction in accordance with the reaction formula (1) is taken place, or the internal reforming reaction not depending on the aforementioned reaction formula (1) is taken place in a reaction mechanism without using the water.

These proton ($H^+$) generated by the above internal reforming reaction diffuses in the proton conductive electrolyte membrane 6, and then arrives at the cathode catalyst layer 3. On the other hand, the air introduced from the air intake port 14 of the outer case 15 diffuses in both the moisture retaining plate 13 and the cathode gas diffusing layer 4 thereby to be supplied to the cathode catalyst layer 2. In the cathode catalyst layer 2, a reaction shown in the following reaction formula (2) is taken place thereby to generate water. Namely, a power generating reaction is taken place.

$$(3/2)O_2 + 6H^+ + 6e^- \longrightarrow 3H_2O \qquad -------- (2)$$

When the power generating reaction is advanced, the water generated in the cathode catalyst layer 2 in accordance with the reaction formula (2) diffuses in the cathode gas diffusing layer 4, and arrives at the moisture retaining plate 13. An evaporation of the water is inhibited by the moisture retaining plate 13 thereby to increase a water storing amount in the cathode catalyst layer 2. Therefore, in accordance with an advancement of the power generating reaction, there can be realized a state where the moisture retaining amount of the cathode catalyst layer 2 is larger than that of the anode catalyst layer 3.

As a result, due to an osmotic-pressure phenomena, it becomes possible to effectively promote a diffusion reaction for transferring (diffusing) the water generated at the cathode catalyst layer 2 to the anode catalyst layer 3 through the proton conductive electrolyte membrane 6. Therefore, a water-supplying rate to the anode catalyst layer 3 can be increased in comparison with a case where the water-supplying rate depends on only the fuel vaporizing layer, and the internal reforming reaction shown in the reaction formula (1) can be promoted. Therefore, an output power density can be increased and it becomes possible to maintain such a high output power density for a long time period.

Further, when a methanol aqueous solution having a concentration exceeding 50 mol% or a pure methanol is used as the liquid fuel, the water diffused from the cathode catalyst layer 2 to the anode catalyst layer 3 is mainly used for the internal reforming reaction, so that an operation for supplying the water to the anode catalyst layer 3 can be stably advanced whereby the reaction resistance of the internal reforming reaction can be further decreased and a long-term output power characteristic and a load current characteristic of the fuel cell can be further improved. In addition, it is also possible to miniaturize a size of the liquid fuel tank. In this connection, a purity of the pure methanol is preferably set to a range from 95 to 100 mass%.

In this connection, the inventors of the present invention had investigated a relationship between a maximum output power and a thickness of the proton conductive electrolyte membrane of the fuel cell in which a perfluoro-carbon type proton conductive electrolyte membrane was used. As a result, it is confirmed that when the thickness of the proton conductive electrolyte membrane 6 is preferably set to 100 $\mu$m or less, a maximum output power of the fuel cell can be increased. The reason why the high output power can be obtained by setting the thickness of the proton conductive electrolyte membrane 6 to 100 $\mu$m or less is that it becomes possible to further promote the diffusion of water from the cathode catalyst layer 2 to the anode catalyst layer 3.

In this regard, when the thickness of the proton conductive electrolyte membrane 6 is set to less than 10 $\mu$m, there may be posed a fear that a strength of the proton conductive electrolyte membrane 6 is disadvantageously lowered. Therefore, it is preferable to set the thickness of the proton conductive electrolyte membrane 6 to within a range of 10 - 100 $\mu$m, more preferable to set to within a range of 10 - 80 $\mu$m.

According to the fuel cell of the present embodiment, since the membrane electrode assembly 1 constituting the power generating part and the anode conductive layers 7a, 7b bonded to the membrane electrode assembly 1 are pressed by the supporting projections 16 to a side of the outer case 15, it becomes possible to effectively prevent the power generating part from being bent toward the upper space side of the liquid fuel tank 9 to which the power generating part is opposed. As a result, a close-contacting degree between the respective members constituting the power generating part can be increased. Accordingly, a current collecting property is hardly changed, so that the output power characteristics of the fuel cell can be greatly increased.

Further, since the area ratio of the cross sectional area of the supporting projection 16 with respect to the cross sectional area of the liquid fuel tank 9 is set to 10%, the supporting projection 16 can exhibit a sufficient function of pressing the anode conductive layer 7b and the membrane electrode assembly 1 toward the side of the outer case 15, and the bending of the power generating part is eliminated. In addition, the close-contacting degree between the respective constitutional members becomes sufficient, and the impedance between the anode electrode and the cathode electrode is decreased thereby to improve the cell characteristic.

Further, since the plurality of the supporting projections 16 are separately and dispersedly provided with leaving a predetermined interval therebetween, it becomes possible to disperse a stress caused at the power generating part. Furthermore, since the central axis C1 of the air intake port 14 formed to the outer case 15 is arranged so as to deviate from the central axis C2 of the supporting projection 12, the supporting and pressing force by the supporting projection 16 are not released from the air intake port 14 through a thin power generating part. As a result, the pressing force is effectively applied to the outer case 15, so that the pressing force for mutually close-contacting the members constituting the power generating part becomes sufficient. Accordingly, the current collecting property would not be deteriorated.

Furthermore, since the supporting projection 16 is configured such that the cross sectional diameter of the supporting projection 16 is gradually decreased in a direction from the liquid fuel tank 9 to the anode conductive layer 7a, and the liquid fuel tank 9 and the supporting projection 16 are integrally formed as a molded body by an injection molding method or the like, a draft angle (relief angle) is formed to the supporting projection 16, so that it becomes possible to easily take out the molded product from a molding die.

The present invention is not particularly limited to the aforementioned respective embodiments, and can be modified as far as the invention adopts a structure in which the water generated at the cathode catalyst layer 2 is supplied to the anode catalyst layer 3 through the proton conductive membrane 6, so that the operation for supplying the water to the anode catalyst layer 3 is promoted and the water-supplying operation is stably performed.

In this regard, the liquid fuel to be stored in the liquid fuel tank 9 is not always limited to methanol fuel. For example, ethanol fuels such as ethanol aqueous solution, pure ethanol or the like, propanol fuels such as propanol aqueous solution, pure propanol or the like, glycol fuels such as glycol aqueous solution, pure glycol or the like, dimethyl ether, formic acid or other liquid fuels can be also used. At any rate, a liquid fuel in compliance with a fuel cell is suitably used, and accommodated (injected) into the liquid fuel tank 9.

[Example]

Hereunder, examples of the present invention will be more concretely explained with reference to the accompanying drawings.

(Example 1)

<Preparation of Anode Pole>

Perfluoro-carbon sulfonic acid solution, water and methoxy propanol were added to carbon black supporting anode catalyst (Pt:Ru=1:1), so that a paste in which above the carbon black supporting anode catalyst was dispersed was prepared. Thus prepared paste was coated on a porous carbon paper as an anode gas diffusing layer, thereby to prepare an anode pole comprising an anode catalyst layer having a thickness of 450 $\mu$m.

<Preparation of Cathode Pole>

Perfluoro-carbon sulfonic acid solution, water and methoxy propanol were added to carbon black supporting cathode catalyst (Pt), so that a paste in which above the carbon black supporting cathode catalyst was dispersed was prepared. Thus prepared paste was coated on a porous carbon paper as a cathode gas diffusing layer, thereby to prepare a cathode pole comprising a cathode catalyst layer having a thickness of 400 $\mu$m.

A perfluoro-carbon sulfonic acid membrane (nafion membrane; manufactured by E. T. Du Pont de Nemours & Co.) having a thickness of 30 $\mu$m and a moisture content of 10 - 20 mass% was provided as a proton conductive electrolyte membrane to a portion between the anode catalyst layer and the cathode catalyst layer, thereby to form a laminated body. Then, the laminated body was subjected to a hot pressing operation thereby to prepare a membrane electrode assembly (MEA). Further, gold foils each having a predetermined shape as the cathode conductive layer 7a and the anode conductive layer 7b were adhered to the cathode gas diffusing layer 4 and the anode gas diffusing layer 5.

A silicon rubber having a thickness of 100 $\mu$m and a hardness of 50° (JIS K 6253) was prepared as a fuel vaporizing layer.

On the other hand, as the moisture retaining plate 13, there was prepared a porous film composed of polyethylene having a thickness of 500 $\mu$m, an air permeability of 2 sec/100cm$^2$ (JIS P-8117) and a moisture permeability of 4000g/m$^2$·24h (JIS L-1099, A-1 method).

On the other hand, there were prepared many liquid fuel tanks in which a plurality of supporting projections were provided and a side surface of each of the supporting projections is formed to have an inclined angle (draft angle, relief angle) of 3 degree in the axial direction. In this regard, the respective liquid fuel tanks were manufactured such that the total area ratio of the cross sectional areas of the supporting projections for each liquid fuel tank with respect to the cross sectional area of the liquid fuel tank was changed within a range of 3 to 65%.

Thus prepared the membrane electrode assembly 1, the cathode conductive layer 7a, the anode conductive layer 7b, the moisture retaining plate 13, the liquid fuel tank 9 and the fuel vaporizing layer 17 were laminated and fixed, thereby to assemble the internal vaporization type direct methanol fuel cell having an aforementioned structure shown in FIG. 1. At this time, 2mL of pure methanol having a purity of 99.9 wt% was injected into the fuel tank 9, so that there was assembled an internal vaporization type direct methanol fuel cells according to Example 1.

(Comparative Example 1)

On the other hand, the same manufacturing process as in Example 1 was repeated except that the supporting projections 16 were not formed. As a result, a direct methanol type fuel cell according to Comparative Example 1 having the substantially same size as in Example was assembled.

(Comparative Example 2)

On the other hand, the same manufacturing process as in Example was repeated except that the supporting projections 16 were not formed and a porous metal plate having a high rigidity was disposed between the anode conductive layer 7b and the liquid fuel tank 9. As a result, a direct methanol type fuel cell according to Comparative Example 2 having the substantially same structure as in Example 1 was assembled.

According to the above fuel cells of the respective Examples, since the membrane electrode assembly 1 constituting the power generating part and conductive layers 7a, 7b bonded to the assembly 1 are pressed by the supporting projection 16 toward the side of the outer case 15, so that it becomes possible to effectively prevent the power generating part from being bent toward the upper space side of the liquid fuel tank 9 to which the power generating part is opposed. As a result, a close-contacting degree between the respective members constituting the power generating part can be increased. Accordingly, a current collecting property was not changed, so that the output power characteristics of the fuel cell could be greatly increased.

In contrast, in case of the fuel cell according to Comparative Example 1, even if a fastening pressure applied to the outer case 15 and the fuel tank 9 was increased to be high, a bending of the power generating part was advanced with time toward an upper space side of the liquid fuel tank 9 to which the power generating part was opposed. Accordingly, a close-contacting degree between the respective members constituting the power generating part was disadvantageously lowered, and the current collecting property of the collector was changed, so that there was 11% of the entire fuel cells of which the cell output power was liable to lower. As a result, a ratio of the fuel cells having low maintenance-reliability in cell characteristic was increased.

On the other hand, in case of the fuel cell according to Comparative Example 2, since a porous metal plate (presser plate) having a high rigidity was provided to a side of the anode conductive layer 7b, a deformation such as bending of the power generating part could be prevented to some extent. However, a circulation of the vaporized fuel gas was obstructed by this porous metal plate. As a result, it was confirmed that the cell characteristic in the cell of Comparative Example 2 was lowered at an average value of about 17% in comparison with that of Example.

In addition, since the metal plate having a large thickness and a high rigidity was required as an essential element, it was also confirmed that it became difficult to downsize the cell and make it to be thin.

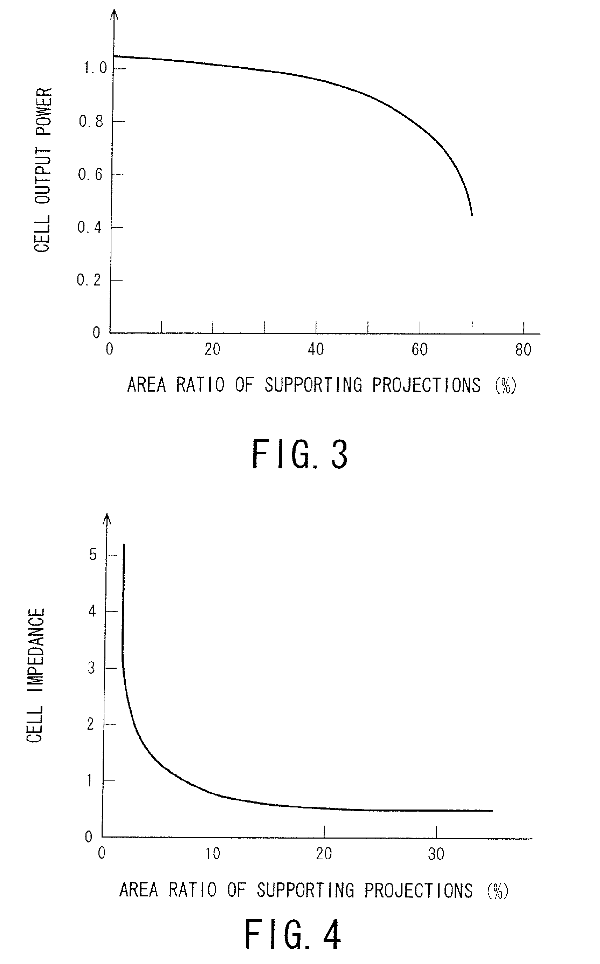

FIG. 3 is a graph showing a relationship between the area ratio of the supporting projection and an average cell power output in a case where fuel cells of the respective embodiments are normally operated. While, FIG. 4 is a graph showing a relationship between the area ratio of the supporting projection and an average value of impedance in the fuel cells of the respective embodiments.

As is clear from the results shown in FIG. 3, when the area ratio of the total cross sectional areas of the supporting projections with respect to the cross sectional area of a space portion of the liquid fuel tank was set to a range of 50% or less, the lowering of an average value of the cell power outputs could be suppressed within a range of 10% or less.

As is clear from the results shown in FIG. 4, when the area ratio of the total cross sectional areas of the supporting projections with respect to the cross sectional area of the space portion of the liquid fuel tank was set to a range of 3% or more, it was confirmed that the impedance between the anode electrode and the cathode electrode could be greatly decreased thereby to improve the cell characteristic.

Although the present invention has been described with reference to the exemplified embodiments, the present invention is not limited to the described embodiments. In a concretely embodying stage, the present invention can be also embodied by modifying the constitutional elements without departing from the scope or spirit of the present invention. Further, when a plurality of the constitutional elements disclosed in the above embodiments are appropriately combined, various inventions can be embodied. For example, several constitutional elements may be deleted from an entire constitutional elements indicated in the embodiments. In addition, the constitutional elements each constituting different embodiments may be also appropriately combined.

Brief Description of the Drawings

FIG. 1 is a sectional view schematically showing an example of a structure of a direct methanol type fuel cell according to the present invention.

FIG. 2 is an exploded perspective view schematically showing an assembling state of the fuel cell according to the embodiment shown in FIG. 1.

FIG. 3 is a graph showing a relationship between the area ratio of the supporting projection and an average cell power output in a case where fuel cells of the respective embodiments are normally operated.

FIG. 4 is a graph showing a relationship between the area ratio of the supporting projection and an average value of impedance in the fuel cells of the respective embodiments.

FIG. 5 is a plan view showing another example of a structure of the supporting projection.

FIG. 6 is a cross sectional view taken in the direction of the arrows substantially along the line VI-VI.

FIG. 7 is a cross sectional view showing a structure for attaching the supporting projection to the liquid fuel tank.

FIG. 8 is a cross sectional view showing another structure for attaching the supporting projection to the liquid fuel tank.

FIG. 9 is a cross sectional view showing a still another structure for attaching the supporting projection to the liquid fuel tank.

**Claims**

1. A fuel cell comprising:

   a cathode catalyst layer;
   an anode catalyst layer;
   a membrane electrode assembly including a proton conductive membrane disposed between the cathode catalyst layer and the anode catalyst layer;
   an outer case having an air intake port for supplying an air to the cathode catalyst layer;
   a cathode conductive layer provided to a side of the cathode catalyst layer of the membrane electrode assembly;
   an anode conductive layer provided to a side of the anode catalyst layer of the membrane electrode assembly; and
   a liquid fuel tank for storing a liquid fuel and supplying a vaporized component of the liquid fuel to the anode catalyst layer;

   wherein a supporting projection for supporting the anode conductive layer and the membrane electrode assembly and for pressing the anode conductive layer and the membrane electrode assembly to a side of the outer case is provided to the liquid fuel tank so as to project from a bottom of the liquid fuel tank.

2. The fuel cell according to claim 1, wherein an area ratio of a cross sectional area of the supporting projection with respect to a cross sectional area of the liquid fuel tank is 3 - 50%.

3. The fuel cell according to claim 1, wherein a central axis of the air intake port formed to the outer case is deviated from a central axis of the supporting projection.

4. The fuel cell according to claim 1, wherein a cross sectional diameter of the supporting projection is gradually decreased in a direction from the liquid fuel tank to the anode conductive layer.

5. The fuel cell according to claim 1, wherein a moisture retaining plate for preventing an evaporation of water generated at the cathode catalyst layer is disposed between the outer case and the cathode catalyst layer.

6. The fuel cell according to claim 1, wherein said liquid fuel is a methanol aqueous solution of which concentration exceeds 50 mol%, or a liquid methanol.

7. The fuel cell according to any one of claims 1 to 6, wherein said proton conductive membrane contains perfluoro carbon type resin, and has a thickness of 100 $\mu$m or less.

FIG. 1

FIG. 2

FIG. 3

FIG. 4

17

9

VI

VI

# FIG. 5

20

17

18

9

19  21

# FIG. 6

16a

16a

9

19

21

# FIG. 7

16b    16b

9

22

19    21

# FIG. 8

16c    16c    16c

9

22a

23    23

# FIG. 9

## INTERNATIONAL SEARCH REPORT

International application No.

PCT/JP2006/305364

A.   CLASSIFICATION OF SUBJECT MATTER
*H01M8/04*(2006.01), *H01M8/02*(2006.01), *H01M8/10*(2006.01)

According to International Patent Classification (IPC) or to both national classification and IPC

B.   FIELDS SEARCHED

Minimum documentation searched (classification system followed by classification symbols)
*H01M8/04*(2006.01), *H01M8/02*(2006.01), *H01M8/10*(2006.01)

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
|---|---|---|
| Y<br>A | JP 2004-127833 A  (Fujitsu Ltd.),<br>22 April, 2004 (22.04.04),<br>Full text<br>(Family: none) | 1-2,4-7<br>3 |
| Y<br>A | JP 2000-106201 A  (Toshiba Corp.),<br>11 April, 2000 (11.04.00),<br>Full text<br>& US 6447941 B1 | 1-2,4-7<br>3 |
| Y<br>A | JP 2001-283888 A  (Toshiba Corp.),<br>12 October, 2001 (12.10.01),<br>Full text<br>(Family: none) | 1-2,4-7<br>3 |

☒   Further documents are listed in the continuation of Box C.          ☐   See patent family annex.

| * | Special categories of cited documents: |
|---|---|
| "A" | document defining the general state of the art which is not considered   to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>30 June, 2006 (30.06.06) | Date of mailing of the international search report<br>11 July, 2006 (11.07.06) |
|---|---|
| Name and mailing address of the ISA/<br>Japanese Patent Office | Authorized officer |
| Facsimile No. | Telephone No. |

Form PCT/ISA/210 (second sheet) (April 2005)

**INTERNATIONAL SEARCH REPORT**

| International application No. |
| --- |
| PCT/JP2006/305364 |

C (Continuation). DOCUMENTS CONSIDERED TO BE RELEVANT

| Category* | Citation of document, with indication, where appropriate, of the relevant passages | Relevant to claim No. |
| --- | --- | --- |
| Y<br>A | JP 2003-86207 A  (Sony Corp.),<br>20 March, 2003 (20.03.03),<br>Full text<br>& US 2003/12999 A1        & EP 1406329 A1<br>& WO 03/5470 A1 | 1-2,4-7<br>3 |
| Y<br>A | JP 2001-332287 A  (Sony Corp.),<br>30 November, 2001 (30.11.01),<br>Full text<br>(Family: none) | 5<br>1-4,6-7 |
| A | JP 2004-79506 A  (Hitachi Maxell, Ltd.),<br>11 March, 2004 (11.03.04),<br>Full text<br>& US 2005/100773 A        & WO 03/69709 A1 | 1-7 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3413111 B